# EUROPÄISCHE PATENTSCHRIFT

(11) **EP 1 144 547 B1**
(45) Veröffentlichungstag und Bekanntmachung des Hinweises auf die Patenterteilung: **03.09.2003**
(21) Anmeldenummer: 99968369.1
(22) Anmeldetag: 22.12.1999
(51) Int. Cl.: C09K 19/20, C09K 19/58, C09K 19/38

(54) **VERWENDUNG POLYMERISIERBARER FLÜSSIGKRISTALLINER SUBSTANZEN ZUR HERSTELLUNG OPTISCHER BAUELEMENTE**
UTILIZATION OF POLYMERIZABLE LIQUID CRYSTAL SUBSTANCES FOR THE PRODUCTION OF OPTICAL COMPONENTS
UTILISATION DE SUBSTANCES POLYMERISABLES A CRISTAUX LIQUIDES POUR LA FABRICATION DE COMPOSANTS OPTIQUES

(30) Priorität: 22.12.1998 DE 19859584
(43) Veröffentlichungstag der Anmeldung: 17.10.2001
(73) Patentinhaber: BASF AKTIENGESELLSCHAFT, 67056 Ludwigshafen (DE)
(72) Erfinder: MEYER, Frank, D-69115 Heidelberg (DE); SCHNEIDER, Norbert, D-67122 Altrip (DE); SCHUHMACHER, Peter, D-68163 Mannheim (DE)
(74) Vertreter: Kinzebach, Werner, Dr.
(86) Internationale Anmeldenummer: EP9910294
(87) Internationale Veröffentlichungsnummer: WO00037585

(56) Entgegenhaltungen:
- EP-A- 0 747 382
- WO-A-97/00600
- DE-A- 4 408 171
- DE-A- 19 520 704
- GB-A- 2 328 436
- GB-A- 2 330 139

## Beschreibung

Die vorliegende Erfindung betrifft die Verwendung spezieller polymerisierbarer flüssigkristalliner Verbindungen für die Herstellung optischer Elemente mit farb- und polarisationsselektiver Reflexion sowie optische Elemente, enthaltend diese Verbindungen in monomerer oder polymerisierter Form. Weiterhin betrifft die Erfindung die Verwendung von Flüssigkristallzusammensetzungen, welche wenigstens eine dieser Verbindungen und gegebenenfalls eine oder mehrere chirale Verbindungen enthalten, für die Herstellung optischer Elemente mit farb- und polarisationsselektiver Reflexion.

Zahlreiche Verbindungen gehen beim Erwärmen vom kristallinen Zustand mit definierter Nah- und Fernordnung der Moleküle nicht direkt in den flüssigen, ungeordneten Zustand über, sondern durchlaufen dabei eine flüssigkristalline Phase, in welcher die Moleküle zwar beweglich sind, die Molekülachsen jedoch eine geordnete Struktur ausbilden. Gestreckte Moleküle bilden oft nematische flüssigkristalline Phasen, die durch eine Orientierungsfernordnung durch Parallellagerung der Moleküllängsachsen gekennzeichnet sind. Enthält eine derartige nematische Phase chirale Verbindungen, entsteht eine sogenannte cholesterische Phase, welche durch eine helixartige Überstruktur der Moleküllängsachsen gekennzeichnet ist. Die chirale Verbindung kann dabei die flüssigkristalline Verbindung selbst sein, oder sie kann als chiraler Dotierstoff einer nematischen flüssigkristallinen Phase zugesetzt sein.

Flüssigkristalline Materialien weisen bemerkenswerte optische Eigenschaften auf, die auf ihrem anisotropen Ordnungszustand beruhen. Der flüssigkristalline Ordnungszustand tritt jedoch nur in einem begrenzten Temperaturbereich auf. Oft liegt der Temperaturbereich, in dem flüssigkristalline Phasen auftreten, weit oberhalb der gewünschten Anwendungstemperatur oder er erstreckt sich nur über ein kleines Temperaturintervall.

Es gibt verschiedene Möglichkeiten, die für die Materialeigenschaften erwünschten Ordnungsstrukturen auch im festen Zustand zu erhalten und zu fixieren. Neben glasartigem Erstarren beim Abkühlen aus dem flüssigkristallinen Zustand besteht die Möglichkeit des Einpolymerisierens in polymere Netzwerke oder, für den Fall, dass die flüssigkristallinen Verbindungen polymerisierbare Gruppen enthalten, der Polymerisation der flüssigkristallinen Verbindungen selbst.

Die cholesterische flüssigkristalline Phase weist bemerkenswerte Eigenschaften auf, die die Verwendung von cholesterischen Flüssigkristallen oder Stoffgemischen, die cholesterische Phasen aufweisen, für die Verwendung als Farbfilter und Polarisatoren geeignet erscheinen lassen.

Cholesterische Flüssigkristalle können durch geeignete Orientierungsverfahren in eine verdrillte Struktur gebracht werden. Der Drehsinn kann, abhängig von der verwendeten chiralen Komponente, sowohl links- als auch rechtshändig sein. Diese verdrillte Anordnung der Flüssigkristallmoleküle führt zu der bekannten selektiven Reflexion der cholesterischen Flüssigkristalle (siehe beispielsweise H., Kelker, R. Matz, Handbook of Liquid Crystals, Verlag Chemie, Weinheim, 1980, Kap. 7, S. 293 ff.): zirkular polarisiertes Licht, dessen Wellenlänge und Drehsinn mit der Ganghöhe des Flüssigkristalls übereinstimmen, wird vollständig reflektiert. Entgegengesetzt zirkular polarisiertes Licht beziehungsweise solches mit abweichender Wellenlänge kann den cholesterischen Flüssigkristall ungehindert passieren.

Von weißem unpolarisiertem Licht, welches sämtliche Wellenlängen und Polarisationszustände enthält, wird dementsprechend nur eine schmale zirkular polarisierte Bande reflektiert. Cholesterische Flüssigkristalle können daher als wellenlängenselektive Reflektoren beziehungsweise Polarisatoren eingesetzt werden. vor allem auch die Möglichkeit, durch geeignete Wahl von Art und Anteil der chiralen Gruppen im cholesterischen Flüssigkristall, Reflexionswellenlängen vom nahen Ultraviolett bis weit in den infraroten Wellenlängenbereich realisieren zu können, ist ein außerordentlicher Vorteil der cholesterischen Flüssigkristalle.

Die Verwendung von cholesterischen Flüssigkristallen für die Herstellung von Farbfiltern und Polarisatoren ist beispielsweise aus US-A-3,679,290 oder R. Maurer, D. Andrejewski, F.-H. Kreuzer, A. Miller, Polarizing Color Filters Made from Cholesteric LC-Silicones, SID Digest 1990, S. 110-113 oder M. L. Tsai, S.H. Chen, S.D. Jacobs, Optical Notch Filters using Thermotropic Liquid Crystalline Polymers, Appl. Phys. Lett. 1989, 24(54), S. 2395-2397, oder EP 0 685 749 B1 bekannt.

Des Weiteren wird in folgenden Schriften die Verwendung cholesterischer Flüssigkristalle für die Bildung optischer Elemente beschrieben: JP 10197722 A, WO 98/43225, EP 0 859 969, US 5,793,456, GB 23 24 382, US 5,825,444, EP 0 720 041, EP 0 634 674, GB 23 21 529, US 5,762,823, US 3,679,290, US 5,751,384, GB 23 15 072.

Für die Herstellung optischer Komponenten ist es notwendig, die cholesterischen Flüssigkeiten oder Stoffgemische, die eine cholesterische Phase aufweisen, mit geeigneten Verfahren zu orientieren und nach erfolgter Orientierung zu fixieren. Ein Orientieren der Flüssigkristalle erfolgt in der Regel bei erhöhten Temperaturen im Bereich der cholesterischen Phase durch mechanisches Scheren eines cholesterischen Films zwischen zwei Glasplatten. Häufig sind diese Glasplatten zusätzlich mit Orientierungsschichten versehen, die eine störungsfreie Orientierung gewährleisten sollen. Diese Orientierungsschichten bestehen in der Regel aus geriebenen Polyimidschichten oder Polyvinylalkohol, oder es werden elektrische oder magnetische Felder zusätzlich angelegt, um eine gute Orientierung zu gewährleisten. Entscheidender Einflussfaktor für die Geschwindigkeit der Orientierung ist dabei die Viskosität der verwendeten cholesterischen Substanz. Die Fixierung der cholesterischen Phase kann dadurch erfolgen, dass ein Monomerengemisch mit cholesterischer Phase durch eine schnelle Vernetzungsreaktion wie eine Photopolymerisation eingefroren werden kann. Alternativ hierzu können aber auch Polymere cholesterischer Materialien durch Unterkühlen in die Glasphase konserviert werden. Für die Verwendung von cholesterischen Flüssigkristallen in optischen Elementen ist es notwendig, dass sich geeignete Materialien in automatisierbare, großflächig ausübbare Prozesse derart orientieren lassen, dass sich fehlerfrei cholesterische Filme erhalten lassen. Durch die üblicherweise erhaltenen Multidomänen leidet die optische Qualität der Filme und den hohen Anforderungen an optischen Elementen, wie hohe Reflektivität für streng rechtsoder linkshändig zirkular polarisiertes Licht, kann nicht mehr entsprochen werden. Im Weiteren werden an optische Bauelemente hohe Anforderungen gestellt in Bezug auf Temperatur- und Lichtechtheiten. So werden optische Bauteile, wie Polarisatoren, Notch-Filter, Farbfilter und Kompensationsfolien bei der Display-Herstellung kurzfristig Temperaturen von bis zu 200 °C ausgesetzt, wodurch keine Beeinflussung der optischen Qualitäten der Bauteile auftreten darf. Die aus dem Stand der Technik bisher bekannten optischen Elemente weisen in dieser Hinsicht noch keine voll zufriedenstellenden Eigenschaften auf.

Für den Bau optischer Elemente galt es daher Materialien zu finden, welche neben einer leichten Orientierbarkeit bei möglichst niedrigen Temperaturen während der Verarbeitung eine hohe Stabilität der polymerisierten Filme mit exzellenten optischen Eigenschaften hervorbringen. Insbesondere sollen Materialien bereitgestellt werden, welche die Herstellung optischer Elemente mit verbesserter Temperaturstabilität erlauben.

Diese Aufgaben wurden überraschenderweise gelöst durch die Verwendung polymerisierbarer flüssigkristalliner Verbindungen der allgemeinen Formel I

Z¹-Y¹-A¹-Y³-M-Y⁴-A²-Y²-Z² I,

Unter Polymerisation werden hierbei alle Aufbaureaktionen von Polymeren verstanden, also Additionspolymerisationen als Kettenreaktionen, Additionspolymerisationen als Stufenreaktionen sowie Kondensationspolymerisationen.

Bevorzugte Reste Z¹ und Z² sind 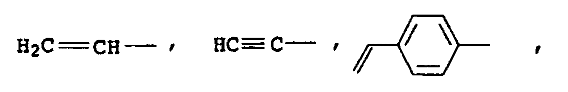 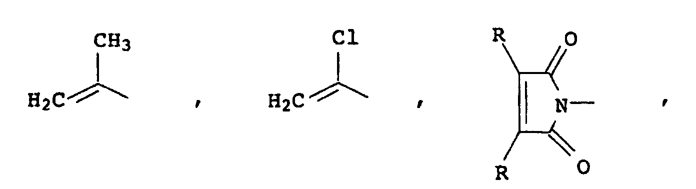 worin
- Z¹, Z²: unabhängig voneinander für einen Rest mit reaktiven, polymerisierbaren Gruppen stehen;
- Y¹ - Y⁴: unabhängig voneinander für eine chemische Einfachbindung, -O-, -S-, -O-CO-, -CO-O-, -O-CO-O-, -CO-NR-, -NR-CO-, -O-CD-NR-, -NR-CO-O- oder -NR-CO-NR stehen, wobei mindestens eine der Gruppen Y³ und Y⁴ -O-CO-O-, -O-CO-NR-, -NR-CO-O- oder -NR-CO-NR- bedeutet, und R für C₁-C₄-Alkyl steht;
- A¹, A²: unabhängig voneinander für einen Spacer mit 2 bis 30 C-Atomen stehen, in welchem die Kohlenstoffkette gegebenenfalls durch Sauerstoff in Etherfunktion, Schwefel in Thioetherfunktion oder durch nichtbenachbarte Iminooder C₁-C₄-Alkyliminogruppen unterbrochen ist; und
- M: für eine mesogene Gruppe steht, die ausgewählt ist unter Gruppen der Formeln 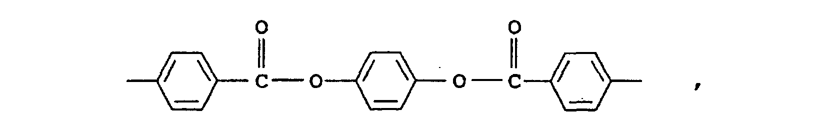 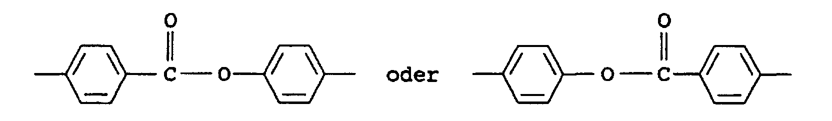 wobei jeder Ring bis zu drei gleiche oder verschiedene Substituenten aus der folgenden Gruppe tragen kann:
C₁-C₂₀-Alkyl, C₁-C₂₀-Alkoxy, C₁-C₂₀-Alkoxycarbonyl, C₁-C₂₀-Monoalkylaminocarbonyl, C₁-C₂₀-Alkylcarbonyl, C₁-C₂₀-Alkylcarbonyloxy, C₁-C₂₀-Alkylcarbonylamino, Formyl, Halogen, Cyan, Hydroxy und Nitro;
in Kombination mit wenigstens einer chiralen Verbindung der Formel le

(Z¹-Y¹-A¹-Y³-M-Y⁴)ₙX (Ie),

in der die Variablen A¹, Z¹, Y¹, Y³, Y⁴ und M wie oben definiert sind;
n für eine Zahl von 1 bis 6 steht und
X ein n-wertiger chiraler Rest ist
für die Herstellung optischer Elemente mit farb- und polarisationsselektiver Reflexion. 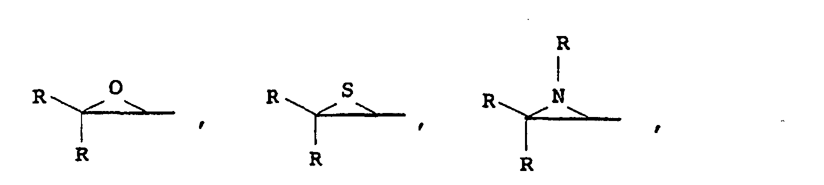 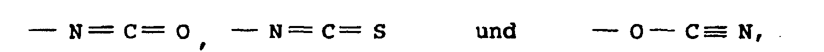 wobei die Reste R für C₁-C₄-Alkyl, wie z. B. Methyl, Ethyl, n-oder i-Propyl oder n-, i- oder t-Butyl, stehen und gleich oder verschieden sein können.

Von den reaktiven polymerisierbaren Gruppen können die Cyanate spontan zu Cyanuraten trimerisieren und sind daher bevorzugt zu nennen. Verbindungen mit Epoxid-, Thiiran-, Aziridin-, Isocyanatund Isothiocyanatgruppen benötigen zur Polymerisation weitere Verbindungen mit komplementären reaktiven Gruppen. So können beispielsweise Isocyanate mit Alkoholen zu Urethanen und mit Aminen zu Harnstoffderivaten polymerisieren. Analoges gilt für Thiirane und Aziridine. Die komplementären reaktiven Gruppen können dabei entweder in einer zweiten erfindungsgemäßen Verbindung vorhanden sein, die mit der ersteren gemischt wird, oder sie können durch Hilfsverbindungen, die zwei oder mehr dieser komplementären Gruppen enthalten, in das Polymerisationsgemisch eingebracht werden. Enthalten diese Verbindungen jeweils zwei dieser reaktiven Gruppen, so entstehen lineare Polymere mit überwiegend thermoplastischem Charakter. Enthalten die Verbindungen mehr als zwei reaktive Gruppen, so entstehen vernetzte Polymere, die mechanisch besonders stabil sind. Die Maleinimidogruppe eignet sich besonders zur radikalischen Copolymerisation mit olefinischen Verbindungen wie Styrol.

Bevorzugte polymerisierbare Gruppen Z¹ und Z² sind diejenigen, die der radikalischen Polymerisation zugänglich sind, also besonders die olefinisch ungesättigten Gruppen, und unter diesen haben in Kombination mit Y¹ bzw. Y² die Gruppen 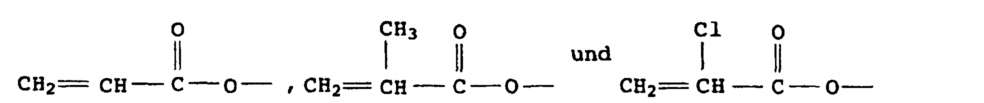 besondere Bedeutung.

Die in den erfindungsgemäßen Verbindungen enthaltenen Molekülteile Z¹, Z², A¹, A², M und X sind über Brückenglieder Y¹ - Y⁴ wie -O-, -S-, -CO-O-, -O-CO-, -O-CO-O-, -CO-NR-, -NR-CO-, -O-CO-NR-, -NR-CO-O-, -NR-CO-NR- oder auch über eine direkte Bindung miteinander verknüpft, wobei vorzugsweise mindestens eine Verknüpfung des Spacers A¹ bzw. A² mit der mesogenen Gruppe durch eine Carbonatgruppe (-OCOO-), eine Carbamatgruppe (-O-CO-NR- oder -NR-CO-O-) oder eine Harnstoffgruppe (-NR-CO-NR-) erfolgt. Chirale polymerisierbare Verbindungen mit einer dieser Gruppen haben die vorteilhafte Eigenschaft besonders niedriger Phasenumwandlungstemperaturen und breiter Phasenbereiche und sind somit für Anwendungen bei Raumtemperatur besonders geeignet.
Dies trifft besonders für die Carbonatgruppe zu.

Als Spacer A¹ und A² kommen alle für diesen Zweck bekannten Gruppen in Betracht. Die Spacer enthalten in der Regel 2 bis 30, vorzugsweise 3 bis 12 C-Atome und bestehen aus vorwiegend linearen aliphatischen Gruppen. Sie können in der Kette z. B. durch nicht benachbarte Sauerstoff- oder Schwefelatome oder Imino- oder Alkyliminogruppen wie Methyliminogruppen unterbrochen sein. Als Substituenten für die Spacerkette kommen dabei noch Fluor, Chlor, Brom, Cyan, Methyl und Ethyl in Betracht.

Repräsentative Spacer sind beispielsweise:

-(CH₂)ₚ-,

-(CH₂CH₂O)ₘCH₂CH₂-,

-CH₂CH₂SCH₂CH₂-,

-CH₂CH₂NHCH₂CH₂-,

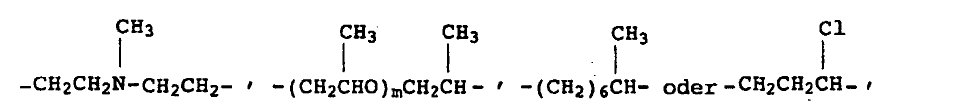

wobei
m für 1 bis 3 und p für 1 bis 12 steht.

Bevorzugte Substituenten für die aromatischen Ringe sind neben Fluor, Chlor, Brom, Cyan, Formyl und Hydroxy vor allem kurzkettige aliphatische Reste wie Methyl, Ethyl, n-Propyl, Isopropyl, n-Butyl, Isobutyl, tert.-Butyl sowie Alkoxy-, Alkoxycarbonyl-, Alkylcarbonyl-, Alkylcarbonyloxy-, Alkylcarbonylamino- und Monoalkylaminocarbonylreste, die diese Alkylgruppen enthalten.

Die äußeren Benzolringe der besonders bevorzugten Gruppen M haben vorzugsweise folgende Substitutionsmuster: 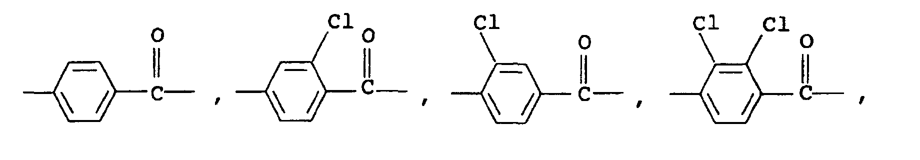 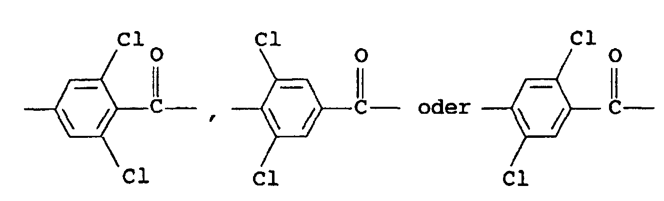 oder sie sind analog mit F, Br, CH₃, OCH₃, CHO, COCH₃, OCOCH₃ oder CN anstelle von Cl substituiert, wobei die Substituenten auch gemischt vorliegen können. Ferner sind die Strukturen 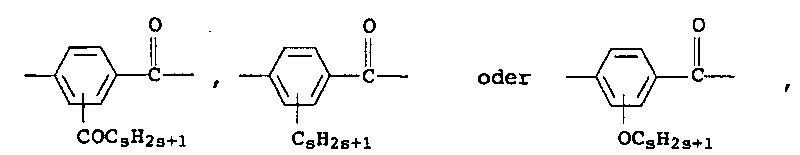 zu nennen, bei denen s 2 bis 20, vorzugsweise 8 bis 15, bedeutet.

Bevorzugte erfindungsgemäße Verbindungen I sind auch solche, in denen die Restepaare Z¹ und Z², Y¹ und Y², Y³ und Y⁴ sowie A¹ und A² jeweils gleich sind.

Ganz besonders bevorzugt ist die mesogene Gruppe M der folgenden Formel

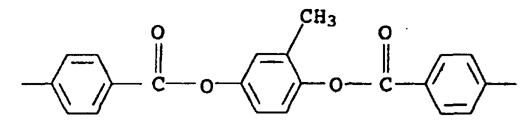

Von den erfindungsgemäßen Verbindungen I können auch Mischungen hergestellt werden. Solche Mischungen besitzen meist eine gegenüber den reinen Mischungskomponenten reduzierte Viskosität und haben in der Regel niedrigere flüssigkristalline Phasentemperaturen, so dass sie teilweise für Anwendungen bei Raumtemperatur geeignet sind.

Besonders bevorzugt ist die Verwendung nematischer Verbindungen der Formel I, worin M für 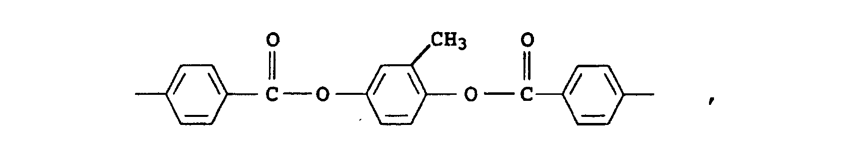 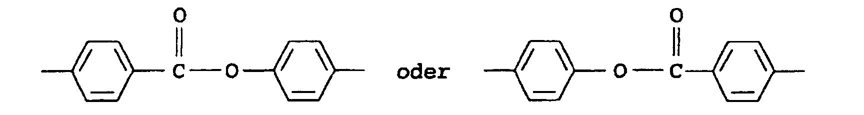 steht,
Z¹, Z² für H₂C=CH- stehen, und
A¹, A² und Y¹ bis Y⁴ wie oben definiert sind.

Nicht-limitierendes Beispiel für eine solche Verbindung ist die der Formel

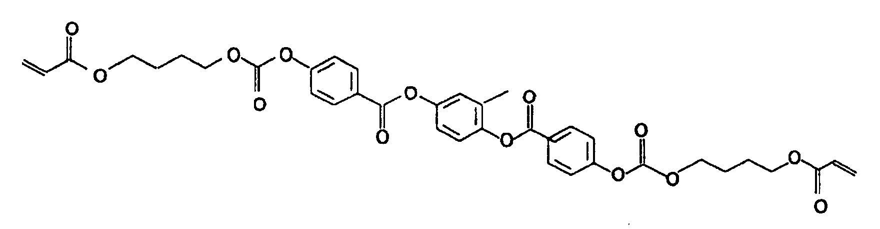

Flüssigkristallzusammensetzungen, welche eine oder mehrere der Verbindungen der Formel I und zusätzlich auch eine oder mehrere chirale Verbindungen der Formel Ie enthalten. Auf diese Weise entstehen cholesterische flüssigkristalline Phasen, die vor allem interessante optische Eigenschaften haben und beispielsweise in Abhängigkeit vom Betrachtungswinkel Licht von unterschiedlicher Wellenlänge reflektieren. Solche Flüssigkristallzusammensetzungen sind insbesondere für den Einsatz in optischen Elementen geeignet.

Als chirale Komponenten sind Verheihdungen der allgemeinen Formel Ie geeignet, die einerseits eine große Verdrillungsfähigkeit aufweisen und andererseits gut mischbar mit den flüssigkristallinen Verbindungen sind, ohne die flüssigkristalline Phasenstruktur zu stören.

Chirale Verbindungen der allgemeinen Formel Ie in der die Variablen A¹, Z¹, Y¹, Y³, Y⁴, Y⁵ und n die oben angegebene Bedeutung für die Formel I besitzen, P¹ für einen Rest, ausgewählt unter Wasserstoff, C₁-C₃₀-Alkyl, C₁-C₃₀-Acyl, C₃-C₈-Cycloalkyl, gegebenenfalls substituiert durch ein bis drei C₁-C₆-Alkyl und wobei die Kohlenstoffkette der Alkyl-, Acyl- und Cycloalkylreste durch Sauerstoff in Etherfunktion, Schwefel in Thioetherfunktion oder durch nichtbenachbarte Imino- oder C₁-C₄-Alkyliminogruppen unterbrochen sein kann, steht, n für eine Zahl von 1 bis 6 steht und X ein n-wertiger chiraler Rest ist.

Reste X sind beispielsweise 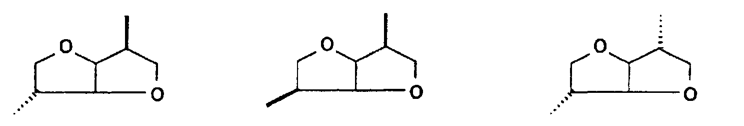 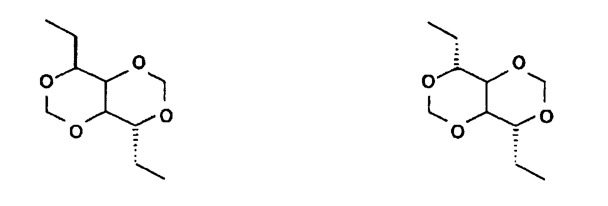 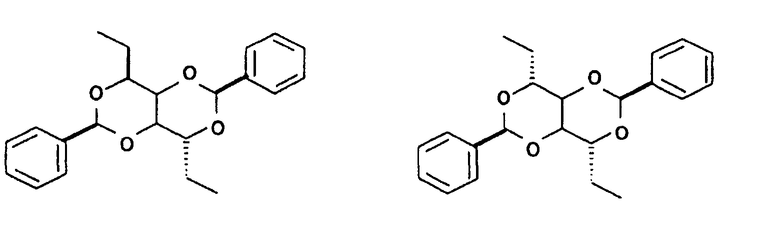 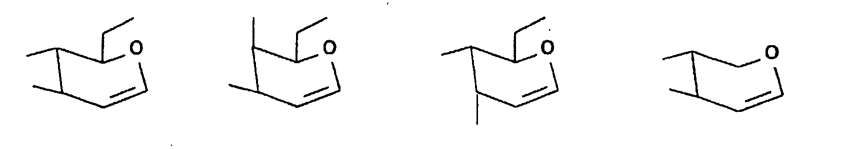 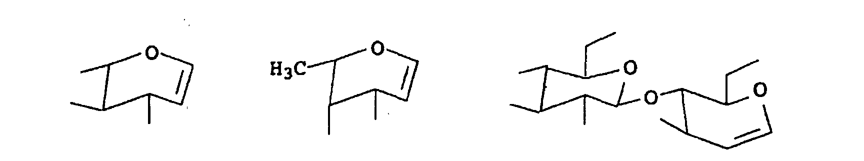 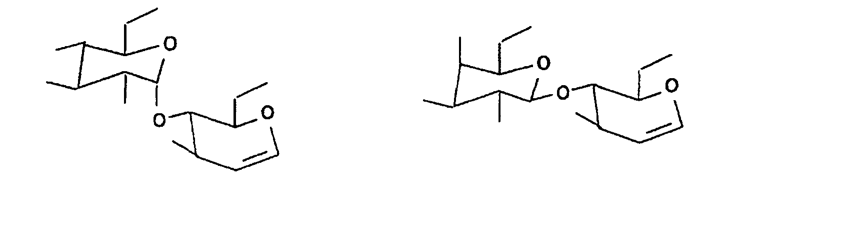 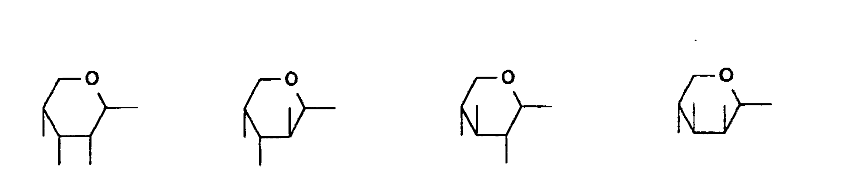 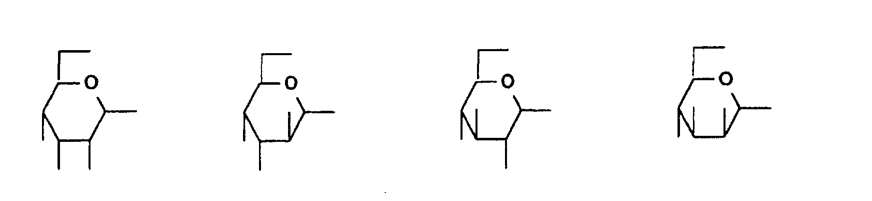 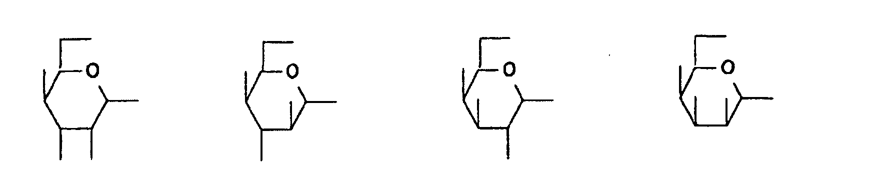 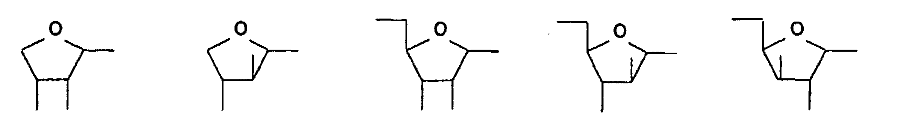 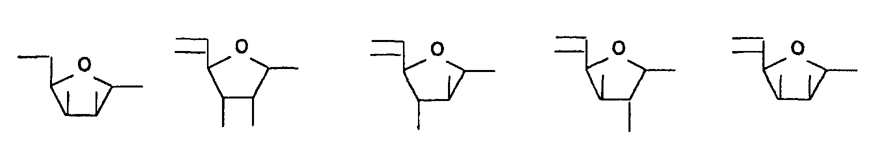 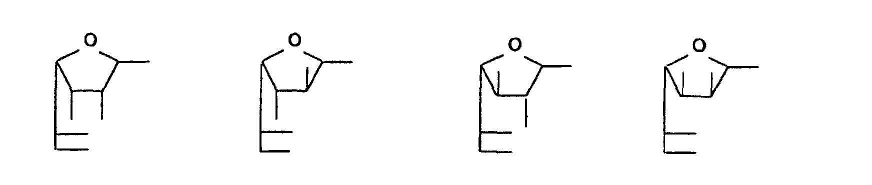 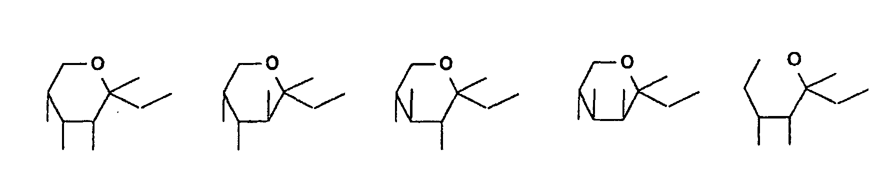 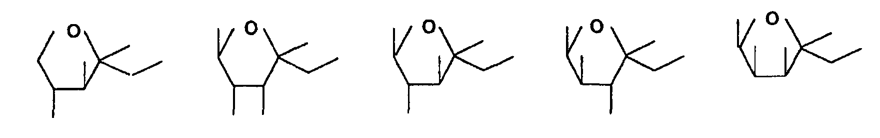 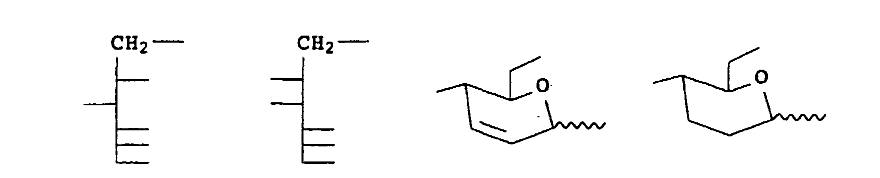 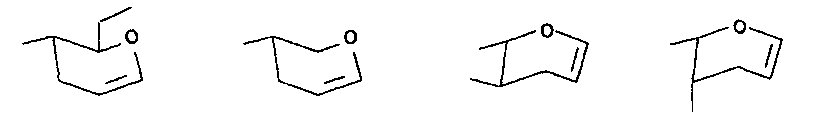 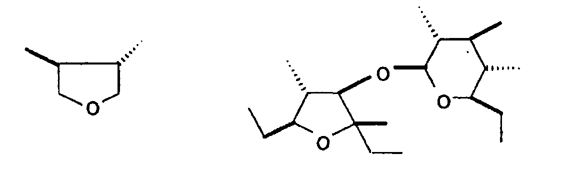 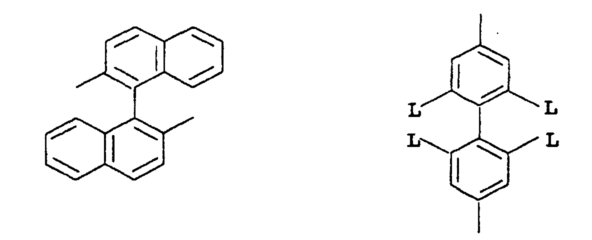 wobei
- L: C₁- bis C₄-Alkyl, C₁-C₄-Alkoxy, Halogen, COOR, OCOR, CONHR oder NHCOR ist und R C₁-C₄-Alkyl bedeutet.
(Die endständigen Striche in den aufgeführten Formeln geben die freien Valenzen an).

Besonders bevorzugt sind z. B.

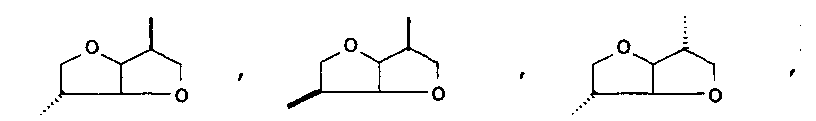

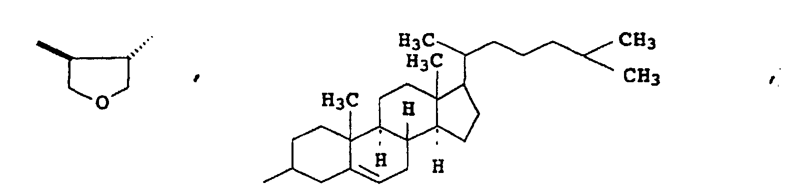

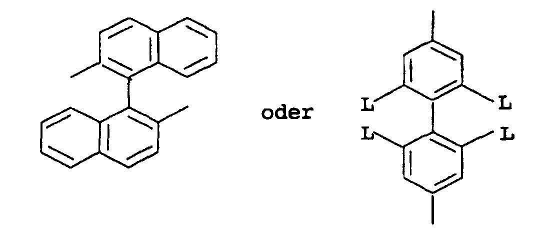

Diese und weitere bevorzugte chirale Komponenten sind beispielsweise in der DE-A 43 42 280 und in den älteren deutschen Patentanmeldungen 19520660.6 und 19520704.1 genannt.

Eine weitere bevorzugt verwendete Gruppe umfasst chirale Verbindungen der Formel Ie, worin
n gleich 2 ist,
Z¹ für H₂C=CH- steht und
X für einen chiralen Rest der Formel 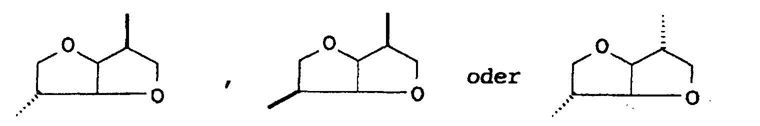 steht und
A¹, Y¹, Y³, Y⁴, Y⁵ und M wie oben definiert sind.

Besonders bevorzugte chirale Komponenten sind folgende Verbindungen (A) bis (G):

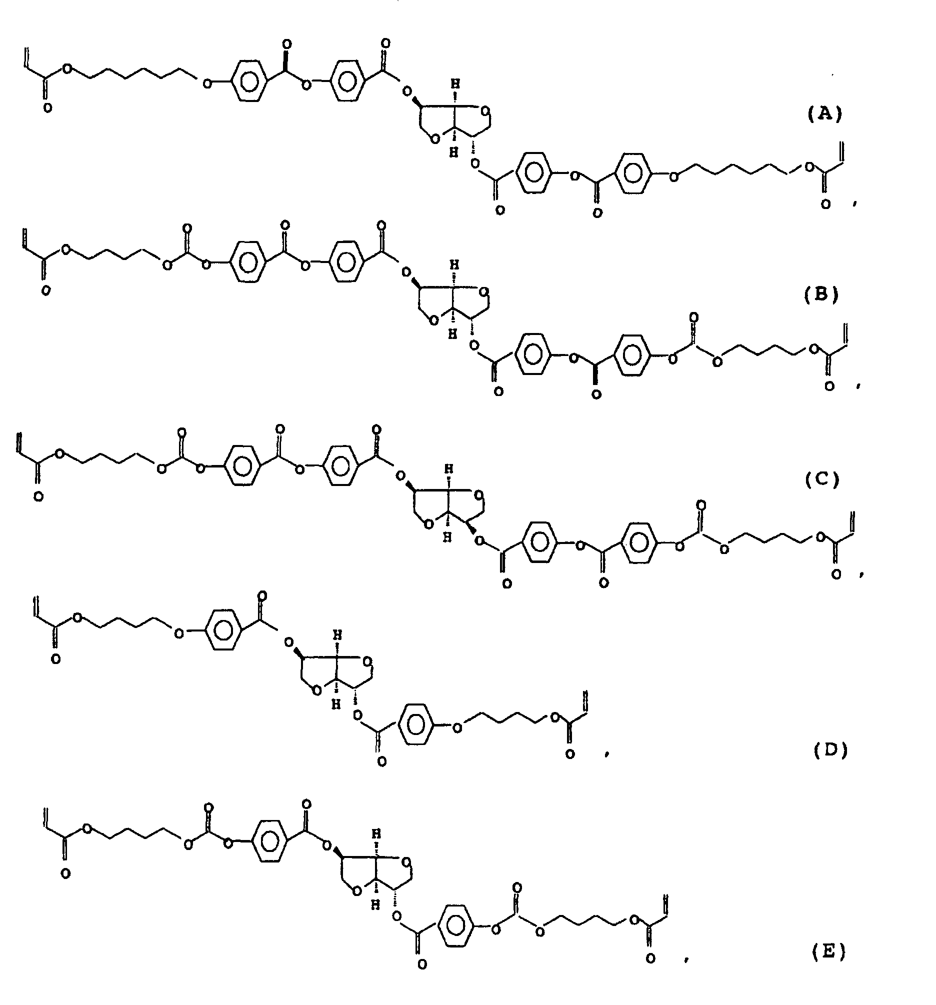

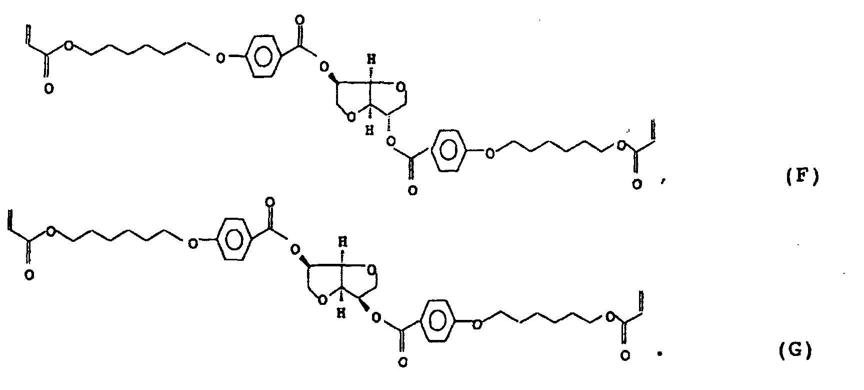

Werden obige nichtchirale Verbindungen in Kombination mit obigen chiralen Verbindungen verwendet, so liegt das molare Verhältnis von nichtchiraler Verbindung der Formel I zu chiraler Verbindung der Formel Ib, c, d oder e im Bereich von etwa 1:0,01 bis 1:0,3, insbesondere 1:0,01 bis 1:0,25.

Polymerisiert man die erfindungsgemäßen Verbindungen oder Flüssigkristallzusammensetzungen, so lässt sich der flüssigkristalline Ordnungszustand fixieren. Die Polymerisation kann je nach polymerisierbarer Gruppe z. B. thermisch oder photochemisch erfolgen. zusammen mit den erfindungsgemäßen Verbindungen oder Flüssigkristallzusammensetzungen lassen sich dabei auch andere Monomere copolymerisieren. Diese Monomeren können andere polymerisierbare flüssigkristalline Verbindungen, chirale Verbindungen, die ebenfalls bevorzugt kovalent einpolymerisiert werden, oder übliche Vernetzungsmittel wie mehrfachvalente Acrylate, Vinylverbindungen oder Epoxide sein. Besonders im Fall von Isocyanaten, Isothiocyanaten oder Epoxiden als polymerisierbare Flüssigkristallverbindungen ist das Vernetzungsmittel bevorzugt ein mehrfachvalenter Alkohol, so dass beispielsweise Urethane gebildet werden können. Das Vernetzungsmittel muss in seiner Menge so an die Polymerisationsverhältnisse angepasst werden, dass einerseits eine zufriedenstellende mechanische Stabilität erreicht wird, andererseits aber das flüssigkristalline Phasenverhalten nicht beeinträchtigt wird. Die Menge des Vernetzungsmittels hängt daher von der speziellen Anwendung der Polymerisate ab. Zur Herstellung von Pigmenten ist eine größere Menge Vernetzungsmittel vorteilhaft, zur Herstellung thermoplastischer Schichten oder z. B. für Display-Orientierungsschichten ist eine geringere Menge Vernetzungsmittel erforderlich. Die Menge des Vernetzungsmittels kann durch einige Vorversuche ermittelt werden.

Eine weitere Modifizierung der aus den erfindungsgemäßen Verbindungen oder Flüssigkristallzusammensetzungen hergestellten Polymerisationsprodukte ist durch die Zugabe polymerer Hilfsstoffe vor der Polymerisation möglich. Solche Hilfsstoffe sollten vorzugsweise entweder in den Ausgangsmischungen löslich sein oder aber in einem mit den Ausgangsmischungen verträglichen organischen Lösungsmittel. Typische Vertreter solcher polymerer Hilfsstoffe sind z. B. Polyester, Celluloseester, Polyurethane sowie polyether- oder polyestermodifizierte oder auch unmodifizierte Silikone. Die für den gewünschten Zweck gegebenenfalls zuzugebende Menge an polymerem Hilfsstoff, seine chemische Natur sowie möglicherweise noch Menge und Art eines Lösungsmittels sind dem Fachmann in der Regel geläufig oder lassen sich ebenfalls experimentell durch wenige Vorversuche ermitteln.

Neben den Verbindungen der Formeln I und Ib bis Ie können noch weitere Verbindungen zugemischt werden, welche nichtkovalent in das polymere Netzwerk eingebaut werden. Dies können beispielsweise kommerziell erhältliche nematische Flüssigkristalle sein.

Weitere Zusatzstoffe können auch Pigmente, Farbstoffe sowie Füllstoffe sein.

Bei den Pigmenten können dies sein anorganische Verbindungen wie beispielsweise Eisenoxide, Titanoxid und Ruß, bei den organischen Verbindungen z. B. Pigmente oder Farbstoffe aus den Klassen der Monoazopigmente, Monoazofarbstoffe sowie deren Metallsalze, Disazopigmente, kondensierte Disazopigmente, Isoindolinderivate, Derivate der Naphthalin- oder Perylentetracarbonsäure, Anthrachinonpigmente, Thioindigoderivate, Azomethinderivate, Chinacridone, Dioxazine, Pyrazolochinazolone, Phthalocyaninpigmente oder basische Farbstoffe wie Triarylmethanfarbstoffe und deren Salze.

Als optische Elemente im Sinne der Erfindung sind alle Gegenstände gemeint, welche die optischen Eigenschaften nematischer und/oder cholesterischer Flüssigkristalle ausnutzen. Im Einzelnen können dies auswahlsweise Verzögerungsfolien, Notch-Filter, Farbfilter für Displays, Polarisatoren, aber auch einfach Spiegel für dekorative Zwecke sein. Die dreidimensionale Gestalt der optischen Elemente kann planar, aber auch konkav oder konvex gekrümmt sein. Als besondere Ausführungsform können die polymerisierten Filme auch zu Pigmenten zerkleinert und nach Einarbeitung in übliche Bindemittel über übliche Auftragsverfahren, wie Spritzen, Walzen, Gießen, Sprühen, Rakeln oder Drucken auf einen Träger aufgebracht werden. Bevorzugte Ausführungsform der optischen Elemente ist eine planare Gestalt.

Wesentlich für die Qualität der optischen Elemente ist die Applikation der Verbindungen der allgemeinen Formel I beziehungsweise Mischungen, welche Verbindungen der allgemeinen Formel I enthalten, da über die Applikationsmethode die optische Qualität der Schichten bestimmt wird.

Als Applikationsmethoden eignen sich allgemein Spritzen, Rollen, Walzen, Gießen, Rakeln und Drucken.

Eine bevorzugte Ausführungsform ist hierbei das Auflösen des flüssigkristallinen Materials in einem leichtflüchtigen Lösungsmittel in Kombination mit gegebenenfalls notwendigen Additiven. Als Lösungsmittel kommen hierbei THF, MEK, Toluol, Ethylacetat, Butylacetat in Frage. Als Additive können Polymerisationsinhibitoren beziehungsweise -initiatoren, Verlaufshilfsmittel, Entlüfter, Haftmittel etc. eingesetzt werden. Die isotrope Lösung wird über ein übliches Auftragswerk auf ein Substrat übertragen. Nach Durchlaufen eines Trockenkanals, wobei das Lösungsmittel entfernt wird, kann der nasse Film mit Hilfe von UV-Strahlung fixiert werden. Die erhaltenen Filme zeigen eine sehr hohe Reflektivität. Diese Filme eignen sich hervorragend als Polarisatoren in LC-Displays. In einer Ausführungsform werden hierzu über Kaschierprozesse mehrere Schichten solcher Filme übereinanderkaschiert und man kann über geeignete Auswahl von Selektivwellenlängen der gewählten Filme einen Polarisator erhalten, welcher das gesamte Licht des sichtbaren Spektrums abdeckt (EP 0 720 041).

Alternativ zu solch einem Mehrschichtpolarisator kann das Material I auch in Kombination mit geeigneten Verbindungen und Verarbeitungsbedingungen in sogenannten Breitbandpolarisatoren eingesetzt werden. Die prinzipielle Vorgehensweise hierfür ist in den Patentschriften WO 98/08135, EP 0 606 940-A2, GB 23 21 529 A, WO 96/02016 vorgezeichnet, worauf hiermit ausdrücklich Bezug genommen wird.

Auch Farbfilter lassen sich mit Mischungen herstellen, welche Verbindungen der allgemeinen Formel I enthalten. Hierzu können gezielt die benötigten Wellenlängen über dem Fachmann gebräuchliche Auftragsverfahren aufgebracht werden. Eine alternative Auftragsform nutzt die Thermochromie cholesterischer Flüssigkristalle. Durch Einstellung der Temperatur lässt sich die Farbe der cholesterischen Schicht von Rot über Grau nach Blau verschieben. Mit Hilfe von Masken lassen sich gezielt bestimmte Zonen bei definierter Temperatur polymerisieren. Entscheidende Einflussgröße für die Thermochromie und Händigkeit der cholesterischen Mischung, welche Verbindungen der Formel I enthalten, ist die Auswahl des chiralen Hilfsstoffs. Er bestimmt die Händigkeit des reflektierten Lichts wie auch die Thermochromie des cholesterischen Systems.

Neben den optischen Eigenschaften von cholesterischen Phasen, welche Verbindungen der allgemeinen Formel I enthalten, eignet sich auch die nematische Phase dieser Substanzen für die Anwendung in optischen Elementen. Ausgenutzt wird hierbei die Doppelbrechung eines solchen Systems. Angesprochen seien hier vor allem Verzögerungsfolien.

Die unter Verwendung obiger Verbindungen herstellbaren optischen Elemente zeichnen sich insbesondere durch verbesserte Temperaturstabilität aus. Dies ist von besonderer Bedeutung, weil optische Elemente je nach Einsatzgebiet unterschiedlich hohe Temperaturstabilitätskriterien erfüllen müssen.

So sollten in Displays verwendete Polarisatoren über längere Zeit (z. B. über 30 Minuten bis mehrere Stunden, wie z. B. 2 bis 10 oder 2 bis 5 Stunden) bei 100 °C und anschließendem Abkühlen auf Ausgangstemperatur keine Veränderung der optischen und/oder mechanischen Eigenschaften zeigen. Das entspricht etwa der Temperaturbelastung aufgrund der Aufheizung des Displays durch Hintergrundbeleuchtung.

Noch höhere Anforderungen haben Farbfilter zu erfüllen, welche während des Herstellungsprozesses höhere Temperaturen zu durchlaufen haben. So wird häufig eine sogenannte Orientierungsschicht auf Polyimidbasis aufpolymerisiert. Die Polymerisations-Temperatur liegt dabei im Bereich von etwa 230 bis 250 °C.

Da die erfindungsgemäßen Polymerfilme in den optischen Elementen gewöhnlich immer unter Glas oder schützenden Polymerfilmen vorliegen, ist es ausreichend, wenn die Temperaturstabilität im Wesentlichen unter Luftausschluss gegeben ist.

Das erfindungsgemäße Temperaturstabilitätskriterium ist daher erfüllt, wenn die erfindungsgemäßen Elemente nach Erwärmen in einer Inertgasatmosphäre, wie z. B. N₂, auf eine Temperatur größer oder gleich 100 °C, wie z. B. 100 °C bis 350 °C oder 100 °C bis 250 °C, und anschließendes Abkühlen auf die ursprüngliche Temperatur, wie z. B. 20 °C, eine Wellenlängenverschiebung des Reflexionsmaximums von weniger als etwa 40 nm zeigen.

Die Wellenlängenverschiebung kann durch einen zusätzlichen Polymerisationsschrumpf verursacht werden, wodurch die Reflexionswellenlänge zu kürzeren Wellenlängenbereichen verschoben wird. Bevorzugt ist eine Verschiebung von 10 bis 20 nm oder weniger. Besonders bevorzugt sind Polymerfilme ohne messbare irreversible Verschiebung der Reflexionswellenlänge durch eine solche Temperaturbehandlung.

Das erfindungsgemäße Temperaturstabilitätskriterium (und damit auch die optische und mechanische Stabilität) kann in einfacher Weise mit Hilfe unterschiedlicher Verfahren bestimmt werden.

Gemäß einer ersten Methode wird eine polymerisierbare Mischung polymerisierbarer Verbindungen zwischen zwei Objektträgern orientiert, mit UV-Licht polymerisiert und anschließend im Heiztisch in 10 °C-Intervallen z. B. auf 200 °C erhitzt. Nach jedem Intervall wird die Reflexionswellenlänge (bzw. Transmissionswellenlänge) gemessen. Zu sehen ist, dass aufgrund der thermischen Belastung das Netzwerk mit steigender Temperatur expandiert (Rotverschiebung). Wird anschließend das Polymer wieder in denselben Intervallen abgekühlt, ist dieser Prozess im Idealfall reversibel und bei Raumtemperatur wird wieder derselbe Anfangswert der Reflexionswellenlänge erhalten. Die erfindungsgemäßen Verbindungen zeigen ein derart reversibles Verhalten.

Gemäß einer zweiten Methode, welche vorzugsweise auf Mehrschichtsysteme anwendbar ist, wird die bereits polymerisierte Schicht oder der Schichtverbund z. B. bei 230 °C oder bei 250 °C in einen mit Stickstoff gefluteten Ofen verbracht und nach einer Stunde wieder auf Anfangstemperatur (z. B. 20 °C) abgekühlt sowie deren Spektrum vermessen. Dieser Prozess wird gegebenenfalls noch einmal wiederholt. Im Vergleich mit dem Anfangsspektrum vor Beginn der Versuche zeigt sich bei erfindungsgemäßen Systemen weder ein Abbau der Reflexionswerte noch eine Verschiebung der Reflexionswellenlängen.

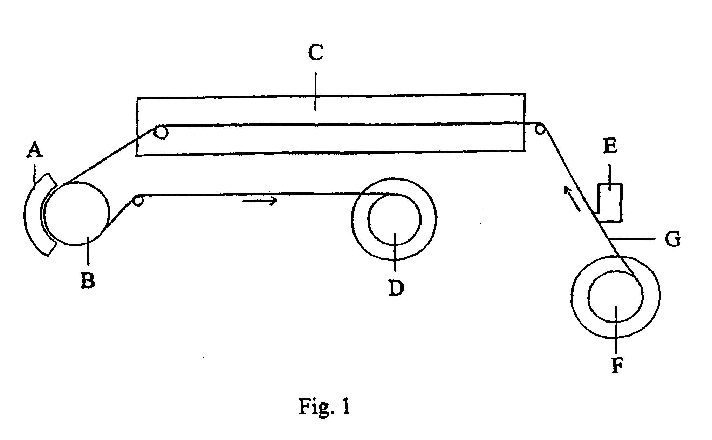

Die Erfindung wird nun durch folgende Ausführungsbeispiele und unter Bezugnahme auf beiliegende Figur näher beschrieben. Dabei zeigt
- Figur 1: eine erfindungsgemäß verwendete Beschichtungsapparatur in schematischer Darstellung.

### Beispiel 1: Rezeptur für gießfähige Mischung

### Hauptkomponenten:

a) nematischer Flüssigkristall (nemLC): Verbindung der Formel: 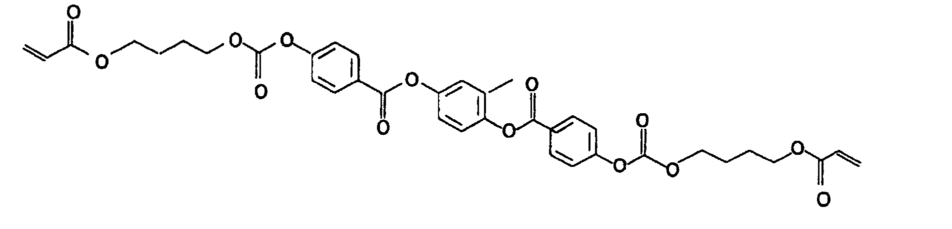
b) chiraler Verdriller (chirDot): Verbindung der Formel (B) 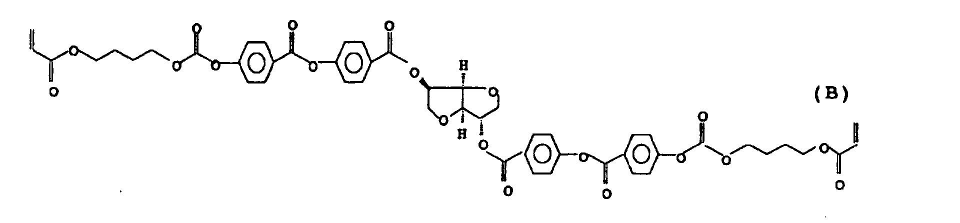
c) Verlaufsmittel: Byk 361
d) UV-Initiator: Irgacure 369

### Rezeptur

| Position | Einwaage |
|---|---|
| NemLC | 16,125 kg |
| chirDot | Variabel, siehe unten |
| Byk 361 | 8 g |
| Irgacure | 0,564 kg |
| THF | 31 kg |

Gesamtmenge: ca. 48 kg
Konzentration (Nemat):= 33,6 %

In ein geeignetes Rührgefäß mit Temperier- und Filtereinrichtung werden das Lösemittel THF, möglichst "frisch", d. h. peroxidfrei, vorgelegt. Unter Rühren wird der nemLC dazugegeben und dann das Verlaufsmittel. 30 Minuten wird gerührt und dann auf 40 °C erwärmt. Dabei geht alles in Lösung. Eventuelle Trübstoffe werden über einen Filter abgetrennt. Nach Filtration wird der Initiator hinzugegeben.

Je nach gewünschter Farbeinstellung wird nun die entsprechende Menge chirDot, welches in THF vorgelöst ist, hinzugegeben (Verdrillerlösung: chirDot 10%ig gelöst in THF). Man erhält so die beschichtungsfertige Mischung.

**Tabelle:**

| mit chirDot-Mengen und die dabei erreichbaren Farbeinstellungen | | | | | |
|---|---|---|---|---|---|
| Nr. / nm | Gew.-% Verdriller | Nr / nm | Gew.-% Verdriller | Nr./ nm | Gew.-% Verdriller |
| 1 / 750 | 3,12 | 6 / 625 | 3,80 | 11 / 500 | 4,73 |
| 2 / 725 | 3,23 | 7 / 600 | 3,96 | 12 / 475 | 4,95 |
| 3 / 700 | 3,36 | 8 / 575 | 4,12 | 13 / 450 | 5,25 |
| 4 / 675 | 3,52 | 9 / 550 | 4,32 | 14 / 425 | 5,54 |
| 5 / 650 | 3,64 | 10 / 525 | 4,52 | 15 / 400 | 5,95 |

Diese Lösung kann nun über verschiedene Beschichtungsmethoden auf ein geeignetes Substrat, wie PET, PP oder Polyacetat, übertragen werden.

### Beispiel 2: Herstellung eines flüssigkristallinen Polymerfilms

Die Beschichtung erfolgt im Wesentlichen wie in der PCT/EP 98/05544 beschrieben. Dazu verwendet man eine Beschichtungsapparatur, die in Figur 1 schematisch dargestellt ist. Eine Polyethylenterephthalatfolie (PET-Folie) (G) mit einer Dicke von 15 µm wurde vom Folienwickel (F) kontinuierlich abgerollt und mit einem Messergießer mit einer gemäß Beispiel 1 hergestellten Mischung beschichtet. Die Gießgeschwindigkeit betrug 10 m/min (Gießüberdruck 0,3 bar; Gießspaltbreite 10 µm). Die Trockung erfolgte bei 60 °C im Trockner (C). Die Härtung der Schicht erfolgte durch UV-Fixierung in der UV-Anlage (A) während das getrocknete Band über die Kühlwalze (B) geführt wurde. Die gehärtete Cholesterenschicht wurde auf die Rolle (D) aufgewickelt. Die Dicke der trockenen cholesterischen Polymerschicht betrug 2,5 µm.

Der ausgehärtete Polymerfilm ist vom Träger abziehbar und kann anschließend in herkömmlicher Weise weiterverarbeitet werden. So kann er beispielsweise auf eine andere cholesterische oder nichtcholesterische Folie aufkaschiert werden; den Film kann mann auch zu Pigmenten zermahlen, die man dann in ein Bindemittel einarbeitet und zur Herstellung erfindungsgemäßer optischer Elemente z.B. durch Spritzen, Gießen, Drucken usw. auf einen geeigneten Träger appliziert. Außerdem kann man die erfindungsgemäß erhaltene cholesterische Folie ein- oder beidseitig mit einer geeigneten Schutzschicht laminieren. Die oben beschriebenen Weiterverarbeitungsschritte basieren auf an sich bekannten Methoden und bedürfen keiner besonderen Erläuterung.

Die in diesem Beispiel hergestellten Polymerfilme zeigen in den oben beschriebenen Methoden zur Bestimmung der Temperaturstabilität keine messbare irreversible Veränderung ihrer optischen und mechanischen Eigenschaften.

## Patentansprüche

1. Verwendung wenigstens einer polymerisierbaren flüssigkristallinen Verbindung der allgemeinen Formel I
Z¹-Y¹-A¹-Y³-M-Y⁴-A²-Y²-Z² (I),
worin
Z¹, Z² unabhängig voneinander für einen Rest mit reaktiven, polymerisierbaren Gruppen stehen;
Y¹ - Y⁴ unabhängig voneinander für eine chemische Einfachbindung, -O-, -S-, -O-CO-, -CO-O-, -O-CO-O-, -CO-NR-, -NR-CO-, -O-CO-NR-, -NR-CO-O- oder -NR-CO-NR stehen, wobei mindestens eine der Gruppen Y³ und Y⁴ -O-CO-O-, -O-CO-NR-, -NR-CO-O- oder -NR-CO-NR- bedeutet, und R für C₁-C₄-Alkyl steht;
A¹, A² unabhängig voneinander für einen Spacer mit 2 bis 30 C-Atomen stehen, in welchem die Kohlenstoffkette gegebenenfalls durch Sauerstoff in Etherfunktion, Schwefel in Thioetherfunktion oder durch nichtbenachbarte Iminooder C₁-C₄-Alkyliminogruppen unterbrochen ist; und
M für eine mesogene Gruppe steht, die ausgewählt ist unter Gruppen der Formeln 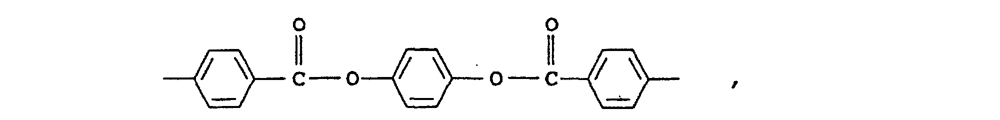 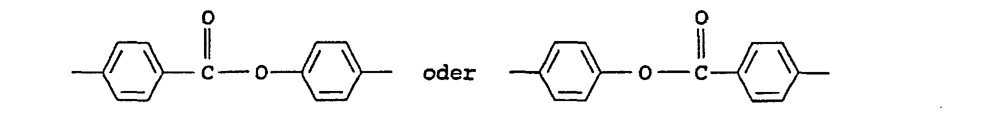 wobei jeder Ring bis zu drei gleiche oder verschiedene Substituenten aus der folgenden Gruppe tragen kann:
C₁-C₂₀-Alkyl, C₁-C₂₀-Alkoxy, C₁-C₂₀-Alkoxycarbonyl, C₁-C₂₀-Monoalkylaminocarbonyl, C₁-C₂₀-Alkylcarbonyl, C₁-C₂₀-Alkylcarbonyloxy, C₁-C₂₀-Alkylcarbonylamino, Formyl, Halogen, Cyan, Hydroxy und Nitro;
in Kombination mit wenigstens einer chiralen Verbindung der Formel Ie
(Z¹-Y¹-A¹-Y³-M-Y⁴)ₙX (Ie),
in der die Variablen A¹, Z¹, Y¹, Y³, Y⁴ und M wie oben definiert sind;
n für eine Zahl von 1 bis 6 steht und
X ein n-wertiger chiraler Rest ist
für die Herstellung optischer Elemente mit farb- und polarisationsselektiver Reflexion.

2. Verwendung nach Anspruch 1, worin M für 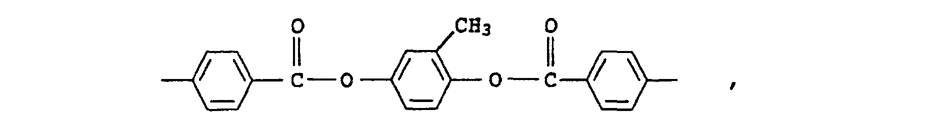 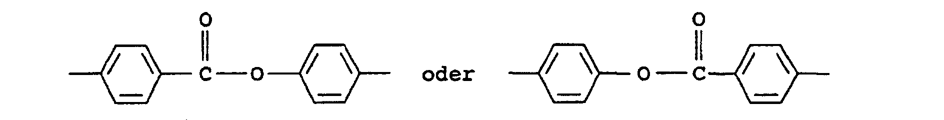 steht,
Z¹, Z² für H₂C=CH- stehen, und
A¹, A² und Y¹ bis Y⁴ wie oben definiert sind.

3. Verwendung nach Anspruch 1, worin die chirale Verbindung eine Verbindung der Formel Ie ist, worin
n gleich 2 ist,
Z¹ für H₂C=CH- steht und
X für einen chiralen Rest der Formel 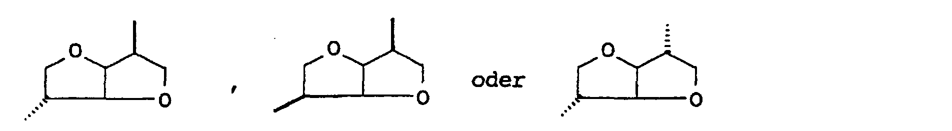 steht und
A¹, Y¹, Y³, Y⁴ und M wie oben definiert sind.

4. Verwendung nach Anspruch 2, einer Verbindung der Formel

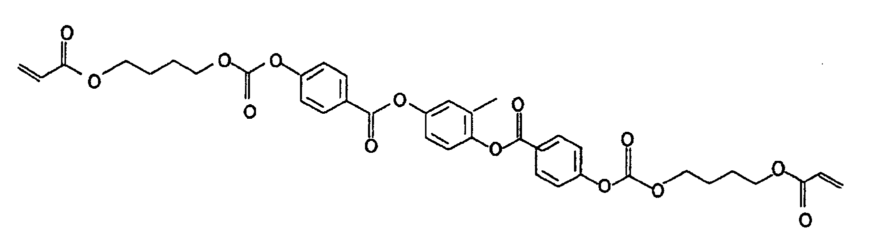

5. Verwendung nach Anspruch 3 oder 4 einer chiralen Verbindung ausgewählt unter

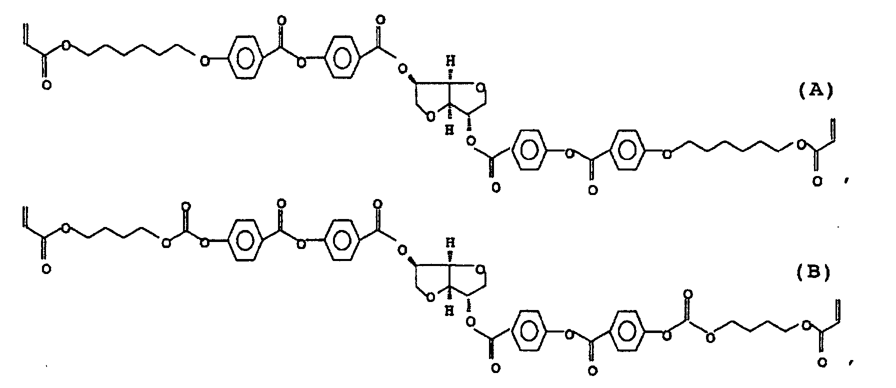

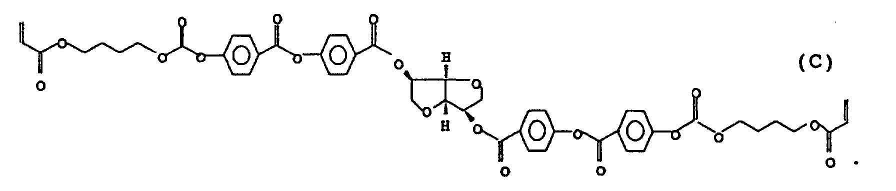

6. Verwendung nach einem der Ansprüche 1 bis 5, wobei das molare Verhältnis von nichtchiraler Verbindung der Formel I zu chiraler Verbindung der Formel Ie im Bereich von 1 : 0,01 bis 1 : 0,25 liegt.

7. Verwendung nach einem der vorherigen Ansprüche, **dadurch gekennzeichnet, dass** die optischen Elemente Temperaturstabilität besitzen.

8. Verwendung nach Anspruch 7, **dadurch gekennzeichnet, dass** die optischen Elemente nach Erwärmen in einer Inertgasatmosphäre auf eine Temperatur größer oder gleich 100 °C und anschließendes Abkühlen auf die ursprüngliche Temperatur eine Wellenlängenverschiebung des Reflexionsmaximums von weniger als 40 nm zeigen.

9. Optische Elemente, hergestellt unter Verwendung wenigstens einer Verbindung gemäß der Definition in einem der Ansprüche 1 bis B.

10. Optisches Element nach Anspruch 9, ausgewählt unter Polarisatoren, wie Breitband- oder Mehrschichtpolarisatoren, Farbfiltern, Verzögerungsfolien, Spiegel oder Kompensationsfolien.

## Claims

1. The use of at least one polymerizable liquid-crystalline compound of the general formula I
Z¹-Y¹-A¹-Y³-M-Y⁴-A²-Y²-Z² (I),
in which
Z¹ and Z², independently of one another, are a radical containing reactive, polymerizable groups;
Y¹ - Y⁴, independently of one another, are a single chemical bond, -O-, -S-, -O-CO-, -CO-O-, -O-CO-O-, -CO-NR-, -NR-CO-, -O-CO-NR-, -NR-CO-O- or -NR-CO-NR, where at least one of the groups Y³ and Y⁴ is -O-CO-O-, -O-CO-NR-, - NR-CO-O- or -NR-CO-NR-, and R is C₁-C₄-Alkyl;
A¹ and A^{2,} independently of one another, are a spacer having 2 to 30 carbon atoms, in which the carbon chain may be interrupted by ether oxygen, thioether sulfur or by non-adjacent imino or C₁-C₄-alkylimino groups; and,
M is a mesogenic group selected from groups of formulae 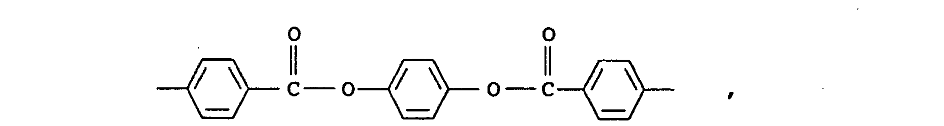 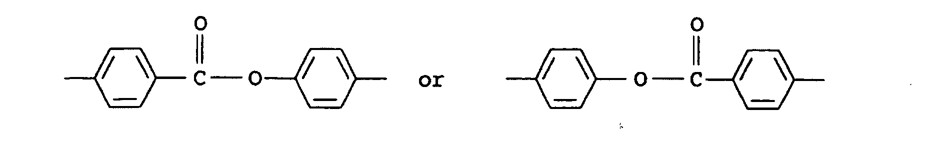 where each ring can carry up to three identical or different substituents from the following group:
C₁-C₂₀-alkyl, C₁-C₂₀-alkoxy, C₁-C₂₀-alkoxycarbonyl, C₁-C₂₀-monoalkylaminocarbonyl, C₁-C₂₀-alkylcarbonyl, C₁-C₂₀-alkylcarbonyloxy, C₁-C₂₀-alkylcarbonylamino, formyl, halogen, cyano, hydroxyl or nitro,
in combination with at least one chiral compound of the formula Ie
(Z¹-Y¹-A¹-Y³-M-Y⁴)ₙX (Ie),
where the variables A¹, Z¹, Y¹, Y³, Y⁴ and M are as defined above,
n is a number from 1 to 6 and
X is an n-valent chiral radical
for the production of optical elements having color- and polarization-selective reflection.

2. The use as claimed in claim 1, in which M is 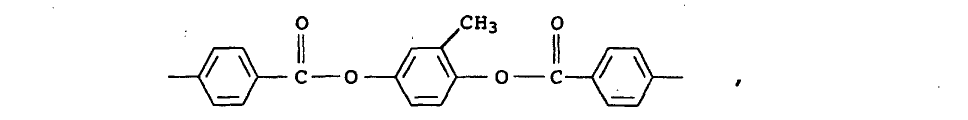 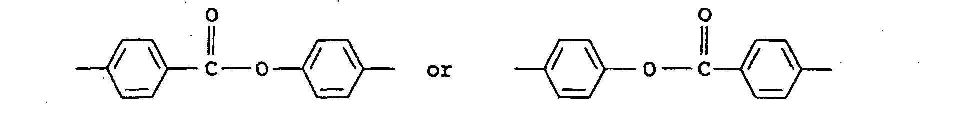 Z¹ and Z² are H₂C=CH-, and
A¹, A² and Y¹ to Y⁴ are as defined above.

3. The use as claimed in claim 1, in which the chiral compound is a compound of the formula Ie, in which
n is 2,
Z¹ is H₂C=CH-, and
X is a chiral radical of the formula 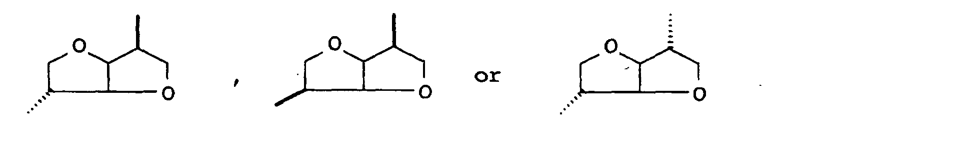 and
A¹, Y¹, Y³, Y⁴ and M are as defined above.

4. The use as claimed in claim 2 of a compound of the formula

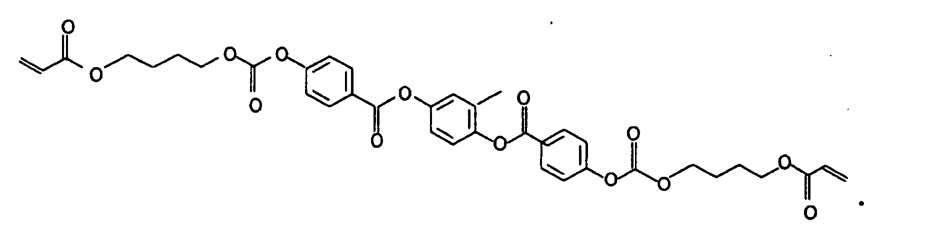

5. The use as claimed in claim 3 or 4 of a chiral compound selected from the following:

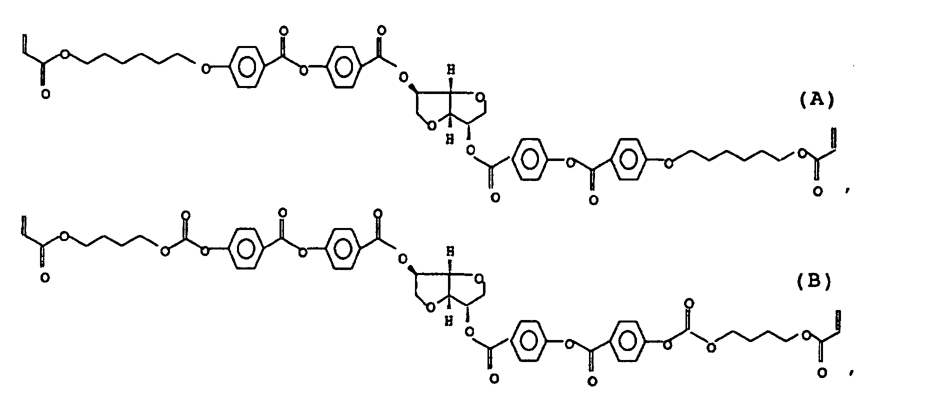

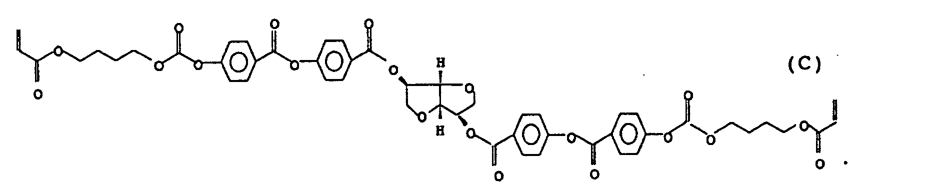

6. The use as claimed in any one of claims 1 to 5, where the molar ratio between the non-chiral compound of the formula I and the chiral compound of the formula Ie is in the range from 1:0.01 to 1:0.25.

7. The use as claimed in any of the preceding claims, wherein the optical elements possess temperature stability.

8. The use as claimed in claim 7, wherein the optical elements, after heating in an inert gas atmosphere to a temperature greater than or equal to 100°C and then cooling to the original temperature, exhibit a shift in the wavelength of the reflection maximum of less than 40 nm.

9. An optical element produced using at least one compound as defined in any one of claims 1 to 8.

10. An optical element as claimed in claim 9, selected from polarizers, such as broad-band or multilayer polarizers, colored filters, retardation films, mirrors and compensation films.

## Revendications

1. Utilisation d'au moins un composé de type cristal liquide, polymérisable de la formule générale I :
Z¹ - Y¹ - A¹ - Y³ - M - Y⁴- A² - Y² - Z² (I)
dans laquelle :
Z¹, Z² représentent indépendamment l'un de l'autre, un reste avec des radicaux polymérisables réactifs ;
Y¹ - Y⁴ représentent indépendamment l'un de l'autre, une liaison chimique simple, -O-, -S-, -O-CO-, -CO-O-; -O-CO-O-, -CO-NR-, -NR-CO-, -O-CO-NR-, -NR-CO-O- ou -NR-CO-NR-, où au moins un des radicaux Y³ et Y⁴ représente -O-CO-O-, -O-CO-NR-, -NR-CO-O- ou -NR-CO-NR-, et R représente un radical alkyle en C₁-C₄ ;
A¹, A² représentent indépendamment l'un de l'autre, un espaceur ayant 2 à 30 atomes C, dans lequel la chaîne carbonée est le cas échéant interrompue par oxygène dans une fonction éther, soufre dans une fonction thioéther ou par des radicaux imino ou (alkyl en C₁-C₄)imino non voisins, et
M représente un groupe mésogène, qui est choisi parmi les groupes de formules : 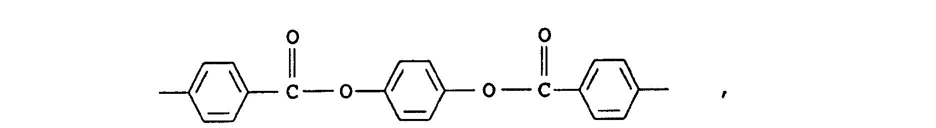 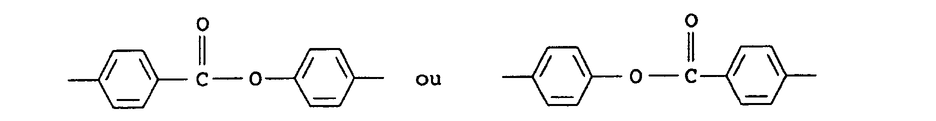 où chaque cycle peut porter jusqu'à trois substituants identiques ou différents, choisis parmi le groupe suivant :
alkyle en C₁-C₂₀, alcoxy en C₁-C₂₀, (alcoxy en C₁-C₂₀)carbonyle, mono(alkyle en C₁-C₂₀)aminocarbonyle, (alkyle en C₁-C₂₀)carbonyle, (alkyle en C₁-C₂₀)carbonyloxy, (alkyle en C₁-C₂₀)carbonylamino, formyle, halogène, cyano, hydroxyle et nitro ;
en combinaison avec au moins un composé chiral de la formule Ie :
(Z¹ - Y¹ - A¹ - Y³ - M - Y⁴)ₙX (Ie)
dans laquelle :
les variables A¹, Z¹, Y¹, Y³, Y⁴ et M sont définies comme ci-dessus ;
n représente un nombre allant de 1 à 6, et
X représente un reste chiral de valence n,
pour la préparation d'éléments optiques avec réflexion sélective de la couleur et de la polarisation.

2. Utilisation selon la revendication 1, dans laquelle
M représente : 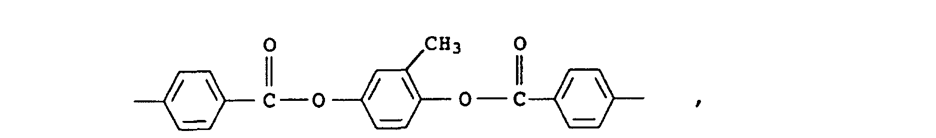 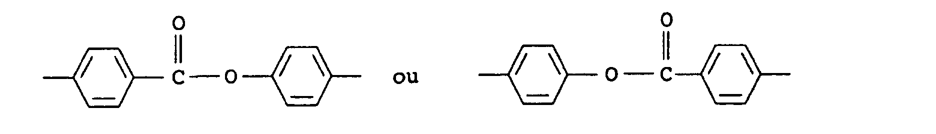 Z¹, Z² représentent H₂C=CH-, et
A¹, A² et Y¹ à Y⁴ sont comme définis ci-dessus.

3. Utilisation selon la revendication 1, dans laquelle le composé chiral est un composé de la formule Ie, dans laquelle :
n est égal à 2,
Z¹ représente H₂C=CH-, et
X représente un reste chiral de la formule : 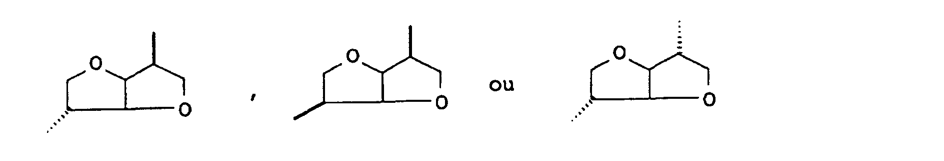
et A¹, Y¹, Y³, Y⁴ et M sont comme définis ci-dessus.

4. Utilisation selon la revendication 2, d'un composé de la formule :

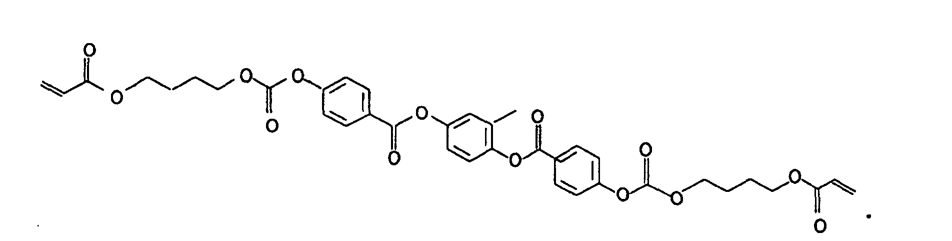

5. Utilisation selon la revendication 3 ou 4, d'un composé chiral choisi parmi :

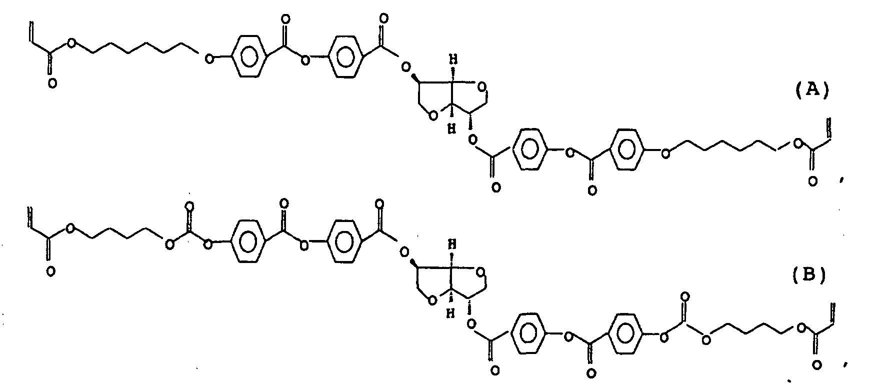

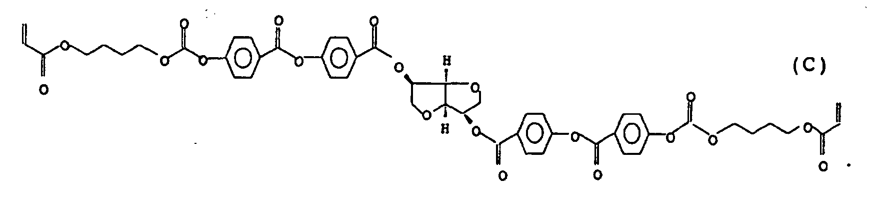

6. Utilisation selon l'une quelconque des revendications 1 à 5, où le rapport molaire du composé non chiral de la formule I au composé chiral de la formule le se situe dans l'intervalle allant de 1:0,01 à 1:0,25.

7. Utilisation selon l'une quelconque des revendications précédentes, **caractérisée en ce que** les éléments optiques possèdent une stabilité à la température.

8. Utilisation selon la revendication 7, **caractérisée en ce que** les éléments optiques présentent après chauffage dans une atmosphère de gaz inerte, jusqu'à une température supérieure ou égale à 100°C et ensuite, refroidissement jusqu'à la température initiale, un déplacement de la longueur d'onde du maximum de réflexion de moins de 40 nm.

9. Eléments optiques, préparés en utilisant au moins un composé selon la définition de l'une quelconque des revendications 1 à 8.

10. Eléments optiques selon la revendication 9, choisis parmi les polariseurs, comme les polariseurs à large bande ou à plusieurs couches, les filtres colorés, les feuilles de retardement, les miroirs ou les feuilles de compensation.
